# EUROPEAN PATENT APPLICATION

(11) **EP 3 339 661 A1**
(43) Date of publication of application: **27.06.2018**
(21) Application number: 16206347.3
(22) Date of filing: 22.12.2016
(51) Int. Cl.: F16B 7/04, F16B 7/20

(54) **COUPLING FOR ALUMINUM PROFILE**

(71) Applicant: FOGA SYSTEM AB, 555 93 Jönköping (SE)
(72) Inventor: Norburg, David, 564 32 Bankeryd (SE)
(74) Representative: AWA Sweden AB

(57) **Abstract**

The present invention includes a coupling arrangement (200) for connecting a first accessory member (520) to a profile member (510) of a frame structure (500). The arrangement comprises a first accessory member (520), a profile member (510), and a coupling element (100), wherein the coupling element (100) extends in a longitudinal direction along a center axis (C) and comprises a first end section (120) being configured to be arranged to the accessory profile member (520), and a second end section (110) comprising a locking stud (111). Further, the profile member comprises a receiving portion (511) configured to receive the locking stud (111), and the locking stud (111) is sized and formed to lock the accessory member (510) to the profile member (520) when being inserted into the receiving portion (511) of the profile member and subsequently rotated around the center axis (C) into a locking position (LP).

## Description

### Technical Field

The present disclosure relates to a frame structure, and especially to an arrangement related to the coupling of the frame members to the frame structure.

### Background

Metal or plastic frames may have many usage areas. An example may be the use in display boards, room dividers and other temporarily mounted frames which may be used in shop displays and showrooms, or table and counter frames. A frame normally consists of a number of frame members, like plastic or metal profiles. Larger frames often have problems with stability, why crossbars are often used to stabilize the frames. In order to connect the crossbars to the frames, it is common to use screws and other mechanical connectors. However, this is not ideal when mounting a temporary frame since there is a lot of work to do this, and loose fasteners may be lost. There is thus a need to provide a solution which makes it easier to connect a crossbar to one or more frame members.

### Summary

It is an object of the present invention to provide an improved solution that alleviates the mentioned drawbacks with present devices. Furthermore, it is an object to provide a coupling which enables a crossbar to be fitted to a profile, such as aluminum profile. The coupling may enable connecting the crossbar to the profile so that they are connected substantially perpendicular relative each other.

The invention is based on the inventors' realization that by constructing a coupling which is rotational asymmetric it is possible to lock the crossbar to the frame by means of rotating the crossbar relative the frame. Furthermore, the inventors have realized that this technology may be used for other aluminum accessories (not only crossbars) to fit the to a frame structure.

An aspect of the present invention is to provide a coupling arrangement for connecting a first accessory member to a profile member of a frame structure. The coupling arrangement comprises a first accessory member, a profile member, and a coupling element. The coupling element extends in a longitudinal direction along a center axis and comprises a first connective part configured to be arranged to the accessory profile member, and a second connective part comprising a locking stud. The profile member comprises a receiving portion configured to receive the locking stud. The locking stud is sized and formed to lock the accessory member to the profile member when being inserted into the receiving portion of the profile member and subsequently rotated around the center axis into a locking position.

This is an advantage since the coupling arrangement is instantly attachable and detachable without the need for additional loose fasteners. The coupling arrangement can be attached anywhere along the profile member, as long as there is a receiving portion present. By profile member it is meant any member that may be part of a frame structure. Generally, a profile member may be an elongated member, and the frame structure, regardless of its use, may be a structure comprising a plurality of profile members. However, the invention shall not be limited to elongated profile members, since the coupling arrangement may be used to connect any two members comprising a receiving portion and a locking stud respectively. The receiving portion may be an aperture sized to receive the locking stud. The receiving portion may also be a slot, a guide, a runner or the like. The coupling arrangement may be used with any type of accessory member. The accessory member may be of a metal or a plastic material. The accessory member may be of aluminium. The accessory member may be an extruded aluminium profile. In the same way, at least one of the profile members may be of a metal or a plastic. The profile member may be of similar material as the accessory member. The coupling element may be of any suitable material. The coupling element may thus be made from plastic, rubber, metal or ceramic for instance. The coupling element may be an insert, configured to be inserted into the accessory member. It is also possible that the coupling element is part of the accessory member.

In one embodiment, the profile member and the first accessory member may extend in a respective longitudinal direction along a respective first and second longitudinal axis. The coupling element further may comprise an accessory connecting part configured to be arranged to an end portion of the accessory member so that the second profile axis and the center axis coincide.

In this way, the coupling member may be arranged to the accessory member at one of the far ends of the accessory member. Generally, the coupling member may be straight. This brings the first end portion and the second end portion to be in line with each other. Also, the locking stud may be arranged in line with the second end portion. However, the shape of the coupling element may be angled. It may also comprise several angled portions. In that way, the first and the second end portions may be arranged at different levels and connected via a middle portion. The middle portion may be adjustable in order to adjust the position of the accessory member.

In one embodiment, the accessory member may be a crossbar for providing stabilization to the frame.

In that way, the accessory member may be sized and shaped in order to be suitable to provide additional stability. This may be done in any suitable way.

In another embodiment, the accessory member may be a profile for displaying goods. An accessory member which may be suitable for displaying goods may be a hanger rail for instance. Such hanger rail may comprise features for retaining a cloth hanger, such as pegs or apertures. Further, it may be suitable for other display members, such as means for arranging a work top, a poster display panel or a board. An accessory member may be a stabilizing member, a part of an arrangement to hold items, a hanger a shelf or the like.

In one embodiment, the locking stud may have a head portion and a waist portion. The receiving portion may have an outer portion and an inner portion. The locking stud may be configured to be inserted into the receiving portion until the head portion is accommodated within the inner portion of the receiving portion. The head portion may have a shape so that, upon rotation of the accessory member, the locking stud may engage with an engagement side of the outer portion.

The head portion may thus be arranged to allow to be rotated within the inner portion of the receiving member. Also the head portion may allow for insertion through the outer portion.

In one embodiment, the inner portion may have a width substantially wider than the width of the outer portion. The head portion may have a width which is not wider than the width of the outer portion. Thus the head portion may lock within the inner portion due to its size.

In one embodiment, a distance from a coupling base surface to an engagement surface of the head portion may be substantially the same or smaller than a depth of the outer portion. This may be in order to provide an interference fit upon rotation of the locking stud. By providing a gradually increasing fit, the friction gradually increases. The friction may prevent the accessory member from detaching unexpectedly. The fit may provide a firm grip. The grip may increase depending on the material used in the coupling member. The material used may be a resilient material, such as a plastic. The material of the coupling member may be at least partly plastic. The engagement surface may be coated with another material to increase the grip. Alternatively, the coupling member may be an integrated part of the accessory member.

In one embodiment, the head portion may have a length. The length of the head portion may be substantially longer than the width of the outer portion. The length of the head portion may be no longer than the width of the inner portion. In that way, it may be ensured that the length of the head portion provides for engagement with the outer portion when rotated.

In one embodiment, the waist portion may be at least partially rounded in shape in order to allow at least partial rotation of the coupling element. The waist portion may be shaped as a rectangular with four corner like formations with two neighboring sides perpendicular. However, two of the opposing corners may have a radius. The radius is sized so that rotation is allowed within the outer portion. The distance between the two opposing radii is thus not greater than the width of the outer portion.

In one embodiment, the locking stud may comprise at least one stop shoulder which is arranged to prevent rotation, and thereby may determine the locking position. The stop shoulder may be any item arranged to prevent rotation. It may be a protrusion or the like.

In one embodiment, the stop shoulder may be arranged so that the locking position is arranged by rotating the coupling element between about 20-90 degrees. Preferably between about 75-90 degrees. More preferably about 90 degrees.

In one embodiment, the stop shoulder may be located on the waist portion. The shape of the waist portion may allow for the other two opposing corners to be substantially sharp. By substantially sharp, it is meant sharp, or at least arranged to prevent rotation. In that way, the sharp edges may prevent rotation. The distance between the two opposing sharp corners may thus by greater than the width of the outer portion. The sharp corners may have a radius significantly smaller than half the width of the outer portion.

In one embodiment, the engagement surface may have a varying shape in order to gradually bring the engagement surface into an interference fit when being rotated. By interference fit, it is meant a firm grip that may require significant force to break. The force may be provided by hand.

A second aspect of the invention is to provide a frame system comprising at least a first profile member and a second profile member parallel to each other, said frame system further comprising: at least one coupling arrangement according to any of the above-mentioned embodiments. The first accessory member is an elongated profile having a first end portion and a second end portion opposite to the first end portion. The first and second end portions respectively are configured to receive a respective first and second coupling element. The coupling elements are configured for coupling of the accessory member to the first and second profile members respectively. The first coupling element is configured for clockwise rotation and the second coupling element is configured for anti-clockwise rotation, so that the accessory member can be coupled to the respective profile member by rotation of the accessory member and allowing simultaneous engagement of the respective coupling member in respective first and second receiving member of the first and second profile member. Generally, the frame system may comprise several profile members in order to form a complete frame. A complete frame may be a podium, a display frame, a panel board, a hanging structure or the like. The frame system may thus comprise at least four ordinary frame members.

A third aspect of the invention is to provide a method for coupling an accessory member to a frame member. The method comprises the steps of providing a coupling arrangement. Mechanically connecting the first end section of the coupling element to the accessory member. inserting the locking stud of the coupling element into the receiving portion of the profile member. Rotating the accessory member together with the coupling element around the center axis and relative the profile member so as to fasten the coupling element to the profile member. The method may further comprise steps to repeat the above steps as required. The method may further comprise the step of detaching the accessory member from the frame member. Detaching may be done by rotating the accessory member in the direction opposite to the direction of fastening.

The advantages of the method are largely analogous to the above mentions advantages of the coupling arrangement and the system.

### Brief Description of the Drawings

The invention will in the following be described in more detail with reference to the enclosed drawings, wherein:
Fig. 1 illustrates a perspective view of a coupling arrangement according to an embodiment of the invention.
Fig. 2 illustrates a perspective view of a coupling element according to an embodiment of the invention.
Fig. 3 illustrates a side view of a coupling element during insertion according to an embodiment of the invention.
Fig. 4 illustrates a side view of a coupling element during rotation according to an embodiment of the invention.
Fig. 5 illustrates a side view of a coupling element in a locking position according to an embodiment of the invention.
Fig. 6 is a cross sectional view from the top of a coupling element during insertion according to an embodiment of the invention.
Fig. 7 is a cross sectional view from the top of a coupling element during rotation according to an embodiment of the invention.
Fig. 8 is a cross sectional view from the top of a coupling element in a locking position according to an embodiment of the invention.
Fig. 9 illustrates a side view of a locking stud according to an embodiment of the invention.
Figs. 10a, 10b and 11 illustrates a cross section of a waist portion of the locking stud according to an embodiment of the invention.
Fig. 12 illustrates a side view of a portion of a locking stud according to an embodiment of the invention.
Fig. 13 is a perspective exploded view of a coupling arrangement according to an embodiment of the invention.
Fig. 14 is a frame structure according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements. The embodiments may be combined in any way.

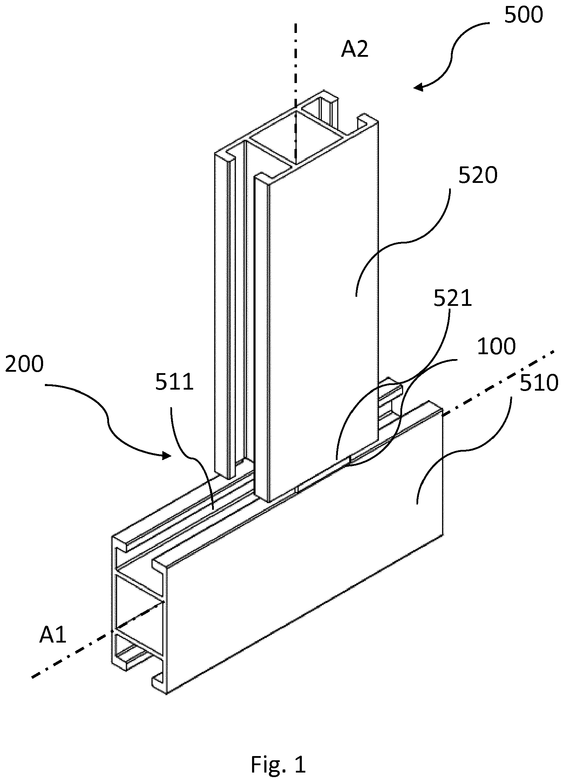

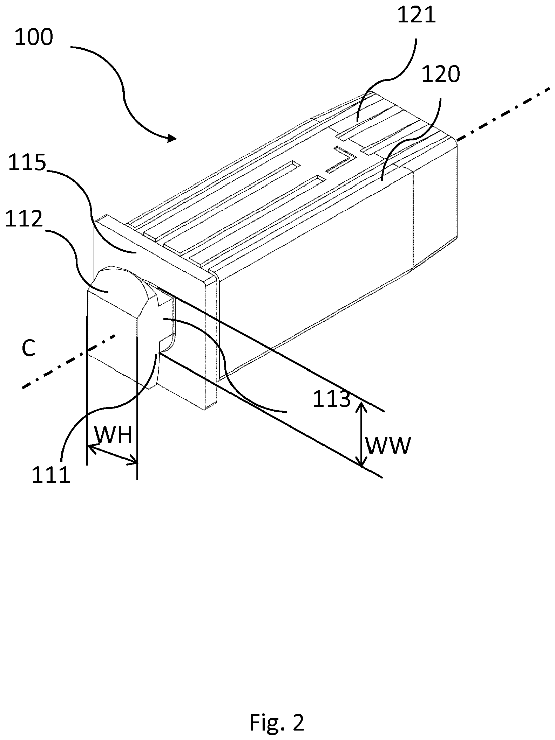

In Fig. 1, part of a frame structure 500 is illustrated. The frame structure 500 in Fig. 1 comprises ordinary profile member 510 and one accessory member 520. The ordinary profile member 510 may be a member which is part of the frame of a common structure, such as a display stand or the like. Often, a frame structure of that kind comprises a plurality of ordinary profile members 510. An example may be a display stand, a table or a panel frame which may comprise at least four to twelve ordinary profile members. An accessory member 520 may be arranged as a cross bar or the like between any two profile members in order to add stability to the structure. This may be even more important when the structure is made from a relatively soft or light material such as aluminum. The profile members may be made from aluminum. As seen in Fig. 1, the illustrated accessory member is an extruded profile. The profile member may also be an extruded profile. As seen, the accessory member 520 is coupled to the profile member 510. The coupling is done via a coupling member 100. The coupling element 100 is further described in Fig. 2.

The coupling element 100 in Fig. 2 is formed as a longitudinally extending element, having a center axis C. The coupling element 100 has a first end section 120. In Fig. 2 with reference to Fig. 1, the first end section has a connective part 121 which is configured to be arranged to a hole of the accessory member 520. The coupling element 100 has a second end section 110 which is configured to be arranged to the profile member 510. The connective part 121 is tapered so that it may conveniently be inserted into the hole of an accessory member 520. Since the accessory member 520 may be an extruded profile, the hole may be a through hole. The second end section 110 comprises a locking stud 111. The locking stud 111 comprises a head portion 112 and a waist portion 113. The locking stud 111 is configured to be coupled to a receiving portion 511 of the profile member 510. Since the profile member 510 may be an extruded profile, the receiving portion 511 may be extending through the entire length of the profile member 510. However, the receiving portion may be an aperture, sized to receive the locking stud 112. The waist portion 113 has a width WW which is at least in part smaller than the width WH of the head portion 112. However, the width WH of the head portion is not smaller than the width WW of the waist portion 113. The coupling element 100 in Fig. 2, has a coupling base surface 115. In some embodiments, the coupling base surface 115 may be part of the accessory member 520.

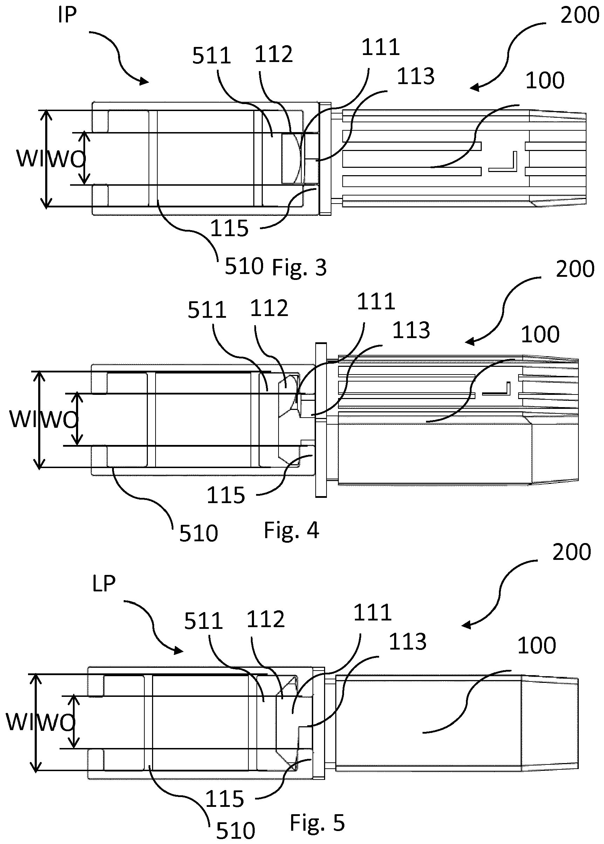

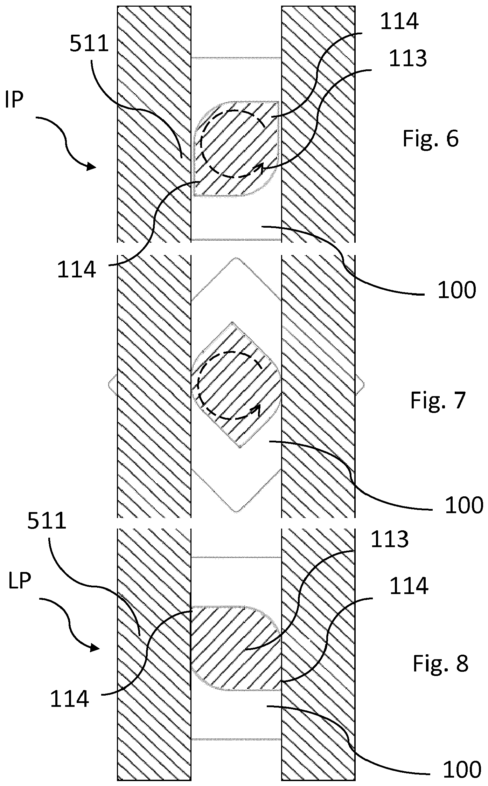

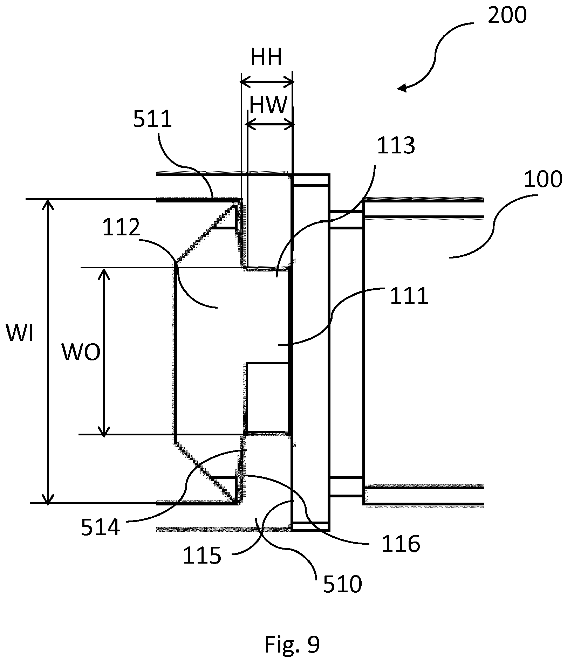

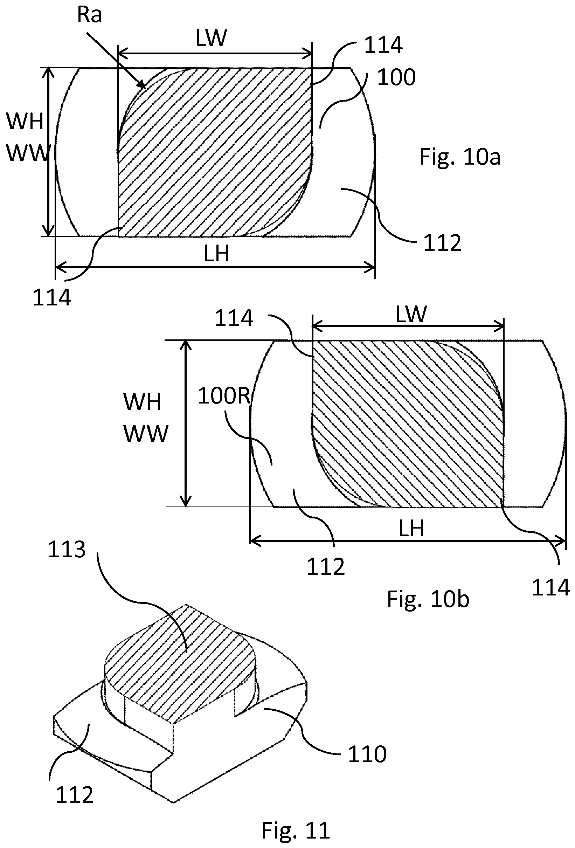

Now referring to Figs. 3-5 and 6-8, where the coupling element 100 is illustrated during the locking procedure to the receiving portion 511 of the profile member 510. Figs. 3-5 are side views while Figs. 6-8 are cross sections viewed from the top. In Fig. 3 and 6, the coupling element 100 is fully inserted in the receiving portion 511 and in an insertion position IP. As seen, the width WH of the head portion 112 and that of the waist portion 113 is substantially the same, and configured to fit within an outer portion 512 of the receiving portion 511. The outer portion is the portion which the head portion 112 enters. The head portion 112 is then further inserted until it reaches the inner portion 513 of the receiving portion 511. As seen, the inner portion 513 is substantially wider than the outer portion 512. When fully inserted, the head portion 512 is contained within the inner portion 513, and the waist portion 513 is surrounded by the outer portion 512. In Figs. 4 and 7, rotation of the coupling element 100 has commenced. Rotation is only possible if the width WW of the waist portion 113 is smaller than the width WO of the outer portion 513. Rotation is only possible while the dimensions of the inner portion 513, outer portion 512, head portion 112 and waist portion 113 allows rotation. As seen in Fig. 4, the outer portion 512 becomes clamped between the head portion 112 and a coupling base surface 115. As seen in Fig. 7, the waist portion is partially rounded. The rounded parts of the waist portion 113 facilitate rotation as long as the width of the rounded part is no more than the width WO of the outer portion 512. The locking stud 111 is configured to allow the accessory member 520 to be locked to the profile member 510. The locking stud 111 is hence configured to be locked to a receiving portion 511 of the profile member. In Fig. 5 and 8, the coupling element 100 has been rotated about 90 degrees relative to its insertion position IP. The rotation of the coupling member 100 is obstructed due to an increase in the width WW of the waist portion 113, as seen in Fig. 8. The increase of width may be due to a stop shoulder 114, which will further be described in Fig. 10 and 11. The coupling element 100 may be configured either for clockwise or counterclockwise rotation. That may also be called Left L or Right R rotation. In that way, an accessory member may be equipped with a Right rotation coupling element 100 R at one end, and a Left rotation coupling element 100 R at the other end. Fig 9 illustrates a more detailed view of the coupling arrangement 200. As seen, the height of the waist portion HW may be substantially the same as the height of the outer portion 512 of the receiving portion 511. As can be seen, the head portion 112 has an engagement surface 116, which is arranged to be engaging the receiving portion 511. While rotating the head portion 112, the engagement surface 116 gradually engages an engagement side 514 of the outer portion 512 until the head portion 112 has reached a locking position LP. The engagement surface 116 may be arranged so that upon rotation, the engagement to the receiving portion 511 becomes gradually tighter. The clamping force which is acted on the outer portion 512 may be determined by how the depth of the outer portion correlates to a distance between the coupling base surface 115 and the engagement surface 116. When the head portion is in a locking position LP, longitudinal movement is prevented.

In Figs. 10a, 10b and 11, a cross section of a waist portion is illustrated. As seen the waist portion 113 has an irregular shape. The waist portion can be described as being having shape with four corner like formations, wherein two neighboring sides are perpendicular relative each other, but two of the opposing corners have a radius Ra. The radius is sized so that rotation is allowed. The distance between the two opposing radii is thus not greater than the width WO of the outer portion 512. The waist portion 113 has a width WW which is substantially the same as the width WH of the head portion.

The waist portion has a length LW which is substantially the same as its width WW. However, neither the width WW or length LW of the waist portion is bigger than the width of the outer portion 512 as seen in Fig. 9.

The waist portion 113 further comprises at least one stop shoulder 114. There is generally provided two stop shoulders 114. The stop shoulders are configured to obstruct rotation. The placement of the stop shoulders may determine the locking position. The largest distance between the stop shoulders 114 is substantially larger than the width WO of the outer portion 512 so that rotation is prevented once the stop shoulders 114 hit against the outer portion 512. The waist portion may thus be shaped as to allow for rotation for a part of the circumference. That is, the shape may be round at least a part of the circumference. The roundness may provide for easy rotation in the receiving portion 511. The stop shoulders 114 may be configured to prevent rotation at angles larger than 90 degrees.

Further, rotations of about a quarter of a turn of the coupling element 100, i.e. about 90 degrees may be allowed by the shape of the waist portion 113. The coupling element 100 may be configured either for clockwise or counterclockwise rotation. That may also be called Left L or Right R rotation. In that way, an accessory member may be equipped with a Right rotation coupling element 100R at one end, and a Left rotation coupling element 100L at the other end. Thereby, allowing the accessory member to be connected to a respective left and right profile member 510, and rotation in the same direction provides simultaneous rotation of the left L and right R coupling elements. Thereby allowing the accessory member to be coupled at both ends to respective profile members 510.

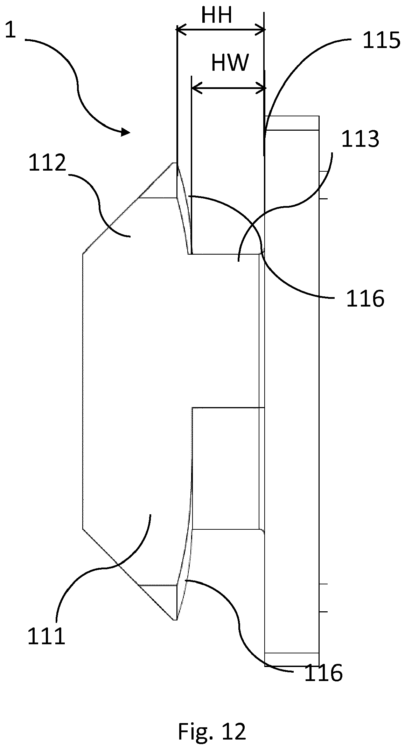

In Fig. 12, a detailed side view of a locking stud 111 is illustrated. As previously described, the locking stud has a head portion 112 and a waist portion 113. The height of the waist portion HW may be substantially the same as the height of the outer portion of the receiving portion. As can be seen, the head portion 112 has an engagement surface 116. While rotating the head portion 112, the engagement surface 116 gradually engages an engagement side 514 of the outer portion 512 until the head portion 112 has reached a locking position LP. The engagement surface may be arranged so that upon rotation, the engagement to the receiving portion 511 becomes gradually tighter. More specifically, the engagement surface may be beveled to lead the engagement surface 116 to a firmer grip against the outer portion 512 of the receiving portion 511. The firm grip may ensure that longitudinal movement, as well as rotational movement and transitional movement is prevented and that the coupling element provides for a secure fit between the accessory member and the profile member.

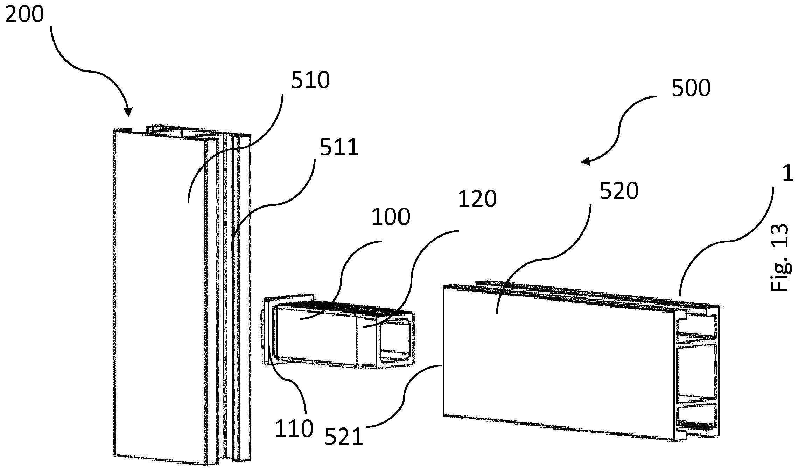

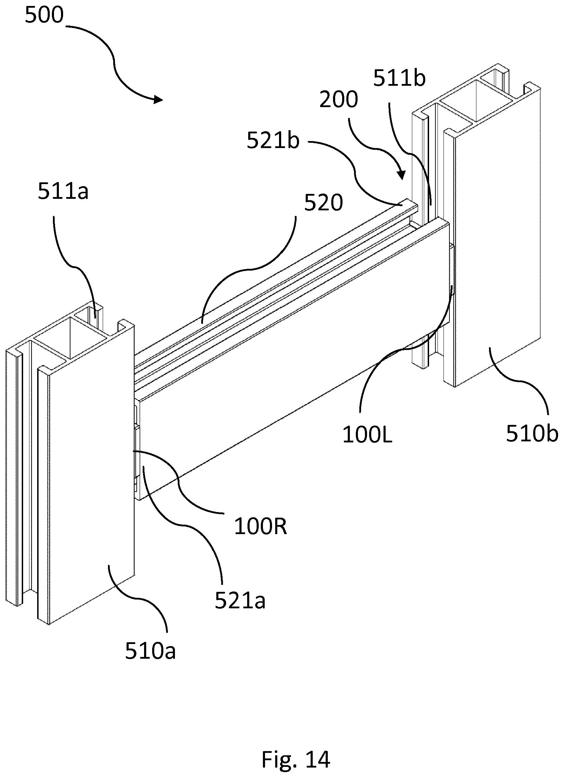

Fig. 13 is an exploded perspective view of a frame structure according to an embodiment of the invention. As seen, the coupling element 100 is to be introduced into a hole in the accessory member 520. Preferably, the hole may be a through hole in the profile of the accessory member 520. The second end section 110 is configured to be arranged to the profile member 510. Fig. 14 is a perspective view of a frame structure 500 according to the invention. The frame structure 500 comprises two profile members 510a, 510b arranged parallel to each other. The profile members 510a, 510b are connected with an accessory member 520. Commonly, the accessory member 520 may be provided in order to stabilize an existing frame structure 500 comprising at least three ordinary profile members 510. The example illustrated in Fig. 14 is thus a schematic view of the connection of the accessory member 520. It should be understood that a frame structure 500 may comprise a plurality of ordinary profile members 510 in order to form a panel, a table, a display unit or the like. In the example illustrated in Fig. 14, two coupling elements 100R, 100L are arranged at each end of the accessory member 520 to allow connection with the receiving portions of the profile members 510a, 510b.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A coupling arrangement (200) for connecting a first accessory member (520) to a profile member (510) of a frame structure (500), comprising:
a first accessory member (520),
a profile member (510), and
a coupling element (100), wherein
the coupling element (100) extends in a longitudinal direction along a center axis (C) and comprises
a first end section (120) being configured to be arranged to the accessory profile member (520), and
a second end section (110) comprising a locking stud (111),
the profile member comprising a receiving portion (511) configured to receive the locking stud (111), and
the locking stud (111) is sized and formed to lock the accessory member (510) to the profile member (520) when being inserted into the receiving portion (511) of the profile member and subsequently rotated around the center axis (C) into a locking position (LP).

2. Coupling arrangement according to claim 1, wherein
the profile member (510) and the first accessory member (520) extends in a respective longitudinal direction along a respective first and second longitudinal axis (A1, A2), and the coupling element (100) further comprises a connective part 121 arranged at the first end section (120) configured to be arranged to an end portion (521) of the accessory member (520) so that the second longitudinal axis (A2) and the center axis (C) coincide.

3. Coupling arrangement according to claim 1 or 2, wherein the accessory member is a crossbar for providing stabilization to the frame.

4. Coupling arrangement according to any one of claim 1 or 2, wherein the accessory member is a profile for displaying goods.

5. Coupling arrangement according to any one of claims 1-4, wherein
the locking stud (111) has a head portion and a waist portion, and the receiving portion has an outer portion and an inner portion,
the locking stud (111) is configured to be inserted into the receiving portion (511) until the head portion (112) is accommodated within the inner portion (513) of the receiving portion (511), and
the head portion (512) has a shape so that, upon rotation of the accessory member (510) the locking stud (511) engages with an engagement side (514) of the outer portion (514).

6. Coupling arrangement according to any one of claims 1-5, wherein the inner portion has a width (WI) substantially wider than the width (WO) of the outer portion, and the head portion (112) has a width (WH) which is not wider than the width (WO) of the outer portion (512).

7. Coupling arrangement according to any one of claims 1-6, wherein a distance from a coupling base surface (115) to an engagement surface (116) of the head portion (112) is substantially the same or smaller than a depth of the outer portion in order to provide an interference fit upon rotation of the locking stud (511).

8. Coupling arrangement according to any one of claims 1-7, wherein the head portion has a length (LH), the length (LH) of the head portion (512) being substantially longer than the width (WO) of the outer portion, wherein the length (LH) of the head portion (512) is no longer than the width (WI) of the inner portion.

9. Coupling arrangement according to any one of claims 1-8, wherein the waist portion (113) is at least partially rounded in shape in order to allow at least partial rotation of the coupling element (100).

10. Coupling arrangement according to any one of claims 1-9, wherein the locking stud comprises at least one stop shoulder which is arranged to prevent rotation, and thereby determines the locking position.

11. Coupling arrangement according to claim 10, wherein the stop shoulder is arranged so that the locking position is arranged by rotating the coupling element between about 20-90 degrees, preferably between about 75-90 degrees, more preferably about 90 degrees.

12. Coupling arrangement according to any of the claims 9-11, wherein the stop shoulder (114) is located on the waist portion.

13. Coupling arrangement according to any of the claims 7-12, wherein the engagement surface has a varying shape in order to gradually bring the engagement surface (116) into an interference fit when being rotated.

14. A frame system comprising at least a first profile member (51 0a) and a second profile member (510b) parallel to each other, said frame system further comprising:
at least one coupling arrangement (200) according to any of the claims 1-13, wherein
the first accessory member (520) is an elongated profile having a first end portion (521 a) and a second end portion (521 b) opposite to the first end portion (521 a), wherein the first and second end portions (521 a, 521 b) respectively are configured to receive a respective first and second coupling element (100R, 100L) configured for coupling of the accessory member (520) to the first and second profile members (510a, 510b) respectively, wherein the first coupling element (100R) is configured for clockwise rotation, and the second coupling element (100L) is configured for anti-clockwise rotation, so that the accessory member (520) is coupled to the respective profile member (510a, 510b) by rotation of the accessory member (520) allowing simultaneous engagement of the respective coupling member (100R, 100L) in respective first and second receiving member (511 a, 511 b) of the first and second profile member (510a, 510b).

15. A method for coupling an accessory member to a frame member, comprising the steps of,
providing a coupling arrangement according to any one of claims 1-14,
mechanically connecting the first end section (120) of the coupling element (100) to the accessory member (520),
inserting the locking stud (111) of the coupling element (100) into the receiving portion (511) of the profile member (510), and
rotating the accessory member (520) together with the coupling element (100) around the center axis (C) and relative the profile member (510) so as to fasten the coupling element (100) to the profile member (510).
